# EUROPEAN PATENT SPECIFICATION

(11) **EP 2 545 728 B1**
(45) Date of publication and mention of the grant of the patent: **02.05.2018**
(21) Application number: 11753519.5
(22) Date of filing: 09.03.2011
(51) Int. Cl.: H04W 72/04, H04W 16/14, H04W 84/18, H04B 7/26

(54) **RADIO COMMUNICATION DEVICE AND RADIO COMMUNICATION METHOD**
FUNKKOMMUNIKATIONSGERÄT UND FUNKKOMMUNIKATIONSVERFAHREN
DISPOSITIF DE COMMUNICATION RADIO ET PROCÉDÉ DE COMMUNICATION RADIO

(30) Priority: 10.03.2010 JP 2010052572
(43) Date of publication of application: 16.01.2013
(73) Proprietor: Ricoh Company, Ltd., Tokyo 143-8555 (JP)
(72) Inventor: SHIOTANI, Yoshimitsu, Tokyo 143-8555 (JP)
(74) Representative: Schwabe - Sandmair - Marx
(86) International application number: PCT/JP2011/056130
(87) International publication number: WO 2011/111864

(56) References cited:
- WO-A1-2009/116682
- WO-A1-2010/001577
- JP-A- 2009 260 925
- US-A1- 2005 002 362
- US-A1- 2005 085 279
- US-A1- 2007 058 661
- US-A1- 2010 002 676
- Wimedia Alliance ET AL: "WiMedia Ultra-wideband: Efficiency Considerations of the Effects of Protocol Overhead on Data Throughput", , 31 January 2009 (2009-01-31), XP055320105, Retrieved from the Internet: URL:http://www.ellisys.com/technology/wime dia_protocol_efficiency.pdf [retrieved on 2016-11-16]

## Description

### TECHNICAL FIELD

The present invention relates to a radio communication network.

### BACKGROUND ART

Network technologies are making rapid progress in recent years. Especially, the progress is remarkable in radio communication technology. In the radio communication technology, it is not necessary to lay communication cables and a user can connect to a network anywhere. For these reasons, the radio communication network has fewer physical limitations compared to a cable network. Therefore, necessity and demands for the radio communication technology are increasing more and more in recent years. In addition, speed-up of the communication speed is highly required in the radio communication technology.

Various radio communication techniques such as wireless LAN based on IEEE (The Institute of Electrical and Electronics Engineers) 802.11, ultra wide band (UWB) communication based on IEEE802.15.3, and sensor network communication based on IEEE802.15.4 and the like have been standardized. For example, in a standard, a communication protocol of the data link layer is defined. For example, as a radio access control method, CSMA/CA (Carrier Sense Multiple Access / Collision Avoidance) and TDMA (Time Division Multiple Access) are standardized.

For example, in narrowband communication such as the wireless LAN, a CSMA/CA access control scheme is used. In the CSMA/CA access control scheme, packet communication is performed after checking network use status by using carrier sense.

For example, in the UWB radio communication, radio communication is performed using a ultra wideband. In the UWB radio communication, since radio communication is performed using a ultra wideband, carrier detection is difficult. The reason is that the frequency band to be scanned is wide. Since carrier detection is difficult, the radio communication device for performing UWB radio communication uses the time division multiple access (TDMA) scheme. The CSMA/CA access control scheme is not used.

In the time division multiple access scheme, for example, a predetermined period is set as a superframe period, and a plurality of time slots are arranged in the superframe period. The superframe period is defined by a standard for example. A radio node participating in a network is assigned a time slot. The radio node can perform packet transmission in the time slot period. Also, in some cases, the superframe period is determined by a network coordinator. In the time division multiple access scheme, since communication available period is set for each radio node, data to be transmitted to the network by each radio node do not contend with each other.

In the time division multiple access scheme includes a request time slot assignment scheme and a cyclic time slot assignment scheme.

In the request time slot assignment scheme, the radio node transmits a time slot request packet each time when performing packet transmission. In the request time slot assignment scheme, the time period of time slots occupied by radio nodes becomes minimum. Thus, use efficiency of the time slots is good. However, since the radio node transmits the time slot request packet each time when performing packet transmission, the transmission delay time from the transmission of the time slot request packet to actual transmission of a packet becomes long. In addition, when the traffic amount of the network increases, there is a case where collision between time slot request packets occurs.

In the cyclic time slot assignment scheme, the radio node that requested a time slot occupies time slots in a plurality of superframe periods. In the cyclic time slot assignment scheme, the radio node does not need to transmit a time slot request packet until the assigned time slot is released. Since it is not necessary to transmit the time slot request packet for each packet transmission, the transmission delay time is short. In addition, contention of request packets with other radio nodes is hard to occur. However, the time period during which one radio node occupies becomes long. For example, there may be a case where all time.slots of one superframe are occupied. When all time slots in one superframe are occupied, no additional radio node cannot participate in the network. When any new radio node cannot participate in the network, the radio node requesting the participation needs to wait until the occupied time slots are released.

Also, in both of the request packet assignment scheme and the cyclic time slot assignment scheme, the number of time slots in the superframe are preset. Therefore, there is a possibility that idle time slots occur depending on the amount of data to be transmitted by the radio node. The use efficiency of time slots deteriorates when idle time slots occur, which is not preferable. Following techniques have been disclosed for reducing idle time slots so far.

For example, priorities are determined for each kind of packets to be transmitted. Then, packets to be transmitted are selected from those having higher priority according to the number of idle time slots and the number of time slots necessary for packet transmission. Accordingly, the number of idle time slots per one superframe can be reduced. Since the number of idle time slots per one superframe can be reduced, use efficiency of time slots can be improved. As a result, throughput improves. However, there is a case where an idle time slot occurs in a superframe. When an idle time slot occurs in a superframe, other radio nodes miss packet transmission chance by the idle time slot.

### Patent document

[Patent document,1] Japanese Laid-Open Patent Application No. 2003-318852
[Patent document 2] US 2007/058661 A1 "Media Access Control Architecture" discloses a scheduled media access control (MAC) architecture and a communication framework defining how to request access, how to send data frames and/or how to terminate a session in terms of functional intervals.

### SUMMARY OF INVENTION

### PROBLEMS TO BE SOLVED BY THE INVENTION

When control of the radio network is performed by the time division multiplexing communication scheme, there are following problems in any case of the request time slot assignment scheme and the cyclic time slot assignment scheme.

In the request time slot assignment scheme, when the number of radio nodes participating in the radio network increases, network traffic becomes enormous. Since the network traffic becomes enormous, contention between time slot request packets may occur. When contention between time slot request packets occurs, there exists a radio node that cannot perform packet transmission until a superframe period in which the occupied time slot is released.

In the cyclic time slot assignment scheme, if there is a superframe period during which any radio node belonging to the radio network does not transmit a time slot request packet, packet communication is not performed in the superframe period. As a result, idle time slots exist. Also, use efficiency of time slots deteriorates.

The present invention is contrived in view of the above-mentioned circumstances, and an object of the present invention is to provide a radio communication device and a radio communication method that can reduce waiting time for transmitting a packet even when the number of radio nodes participating in the radio network is large, and that can improve use efficiency of time slots even when the number of radio nodes participating in the radio network is small.

### MEANS OF SOLVING THE PROBLEMS

The radio communication device is a radio communication device including:
a beacon cycle determination unit configured to determine a beacon cycle for transmitting a beacon based on a sum of a number of time slots that is included in a beacon transmitted by another radio communication device and that the other radio communication device requests for transmitting data and a number of time slots to be requested by the radio communication device for transmitting data; and
a packet transmit and receive control unit configured to control the radio communication device, according to the beacon cycle determined by the beacon cycle determination unit, to transmit a packet at a time slot and to receive a packet from another radio communication device at a time slot different from the time slot for transmission.

The radio communication method is a radio communication method performed by a radio communication device including:
a beacon cycle determination step of determining a beacon cycle for transmitting a beacon based on a sum of a number of time slots that is included in a beacon transmitted by another radio communication device and that the other radio communication device requests for transmitting data and a number of time slots to be requested by the radio communication device for transmitting data; and
a packet transmit and receive control step of controlling the radio communication device, according to the beacon cycle determined by the beacon cycle determination step, to transmit a packet at a time slot and to receive a packet from another radio communication device at a time slot different from the time slot for transmission.

### EFFECTS OF THE PRESENT INVENTION

According to the disclosed radio communication device and the radio communication method, waiting time for transmitting a packet can be reduced even when the number of radio nodes participating in the radio network is large, and use efficiency of time slots can be improved even when the number of radio nodes participating in the radio network is small.

### BRIEF DESCRIPTION OF THE DRAWINGS

Fig. 1 is a schematic diagram showing a radio communication system according to an embodiment of the present invention;
Fig. 2 is a functional block diagram showing a radio communication device according to an embodiment of the present invention;
Fig. 3 is a functional block diagram showing a radio communication device according to an embodiment of the present invention;
Fig. 4 is an explanatory diagram (1) showing an example of a superframe in a radio communication system according to an embodiment of the present invention;
Fig. 5 is an explanatory diagram (2) showing an example of a superframe in a radio communication system according to an embodiment of the present invention;
Fig. 6 is an explanatory diagram (3) showing an example of a superframe in a radio communication system according to an embodiment of the present invention;
Fig. 7 is a flowchart showing operation of a radio communication system according to an embodiment of the present invention;
Fig. 8 is a flowchart showing operation of a radio communication system according to an embodiment of the present invention;
Fig. 9 is a functional block diagram showing a radio communication device according to an embodiment of the present invention;
Fig. 10 is a schematic diagram showing a radio communication system according to an embodiment of the present invention;
Fig. 11 is a functional block diagram showing a radio communication device according to an embodiment of the present invention; and
Fig. 12 is a functional block diagram showing a radio communication device according to an embodiment of the present invention.

### DESCRIPTION OF THE REFERENCE NUMERALS

100ₙ(n is an integer greater than 0) radio communication device
102 radio data processing unit
1022 protocol processing unit
1024 signal processing unit
1026 AD/DA conversion unit
1028 RF(radio frequency) unit
104 central processing unit (CPU)
106 RAM
140 bus
150ₘ (m is an integer greater than 0) radio communication network
302 timer
304 beacon transmit and receive control unit
306 time slot number determination unit
308 power save mode control unit
310 superframe setting unit
312 packet transmit and receive control unit
314 protocol conversion unit

### MODE FOR CARRYING OUT THE INVENTION

In the following, embodiments for carrying out the present invention will be described with reference to the accompanying drawings. In all of the drawings illustrating the embodiments, the same reference symbols are attached to those having the same functions, and descriptions thereof are not repeated.

### <Radio communication system>

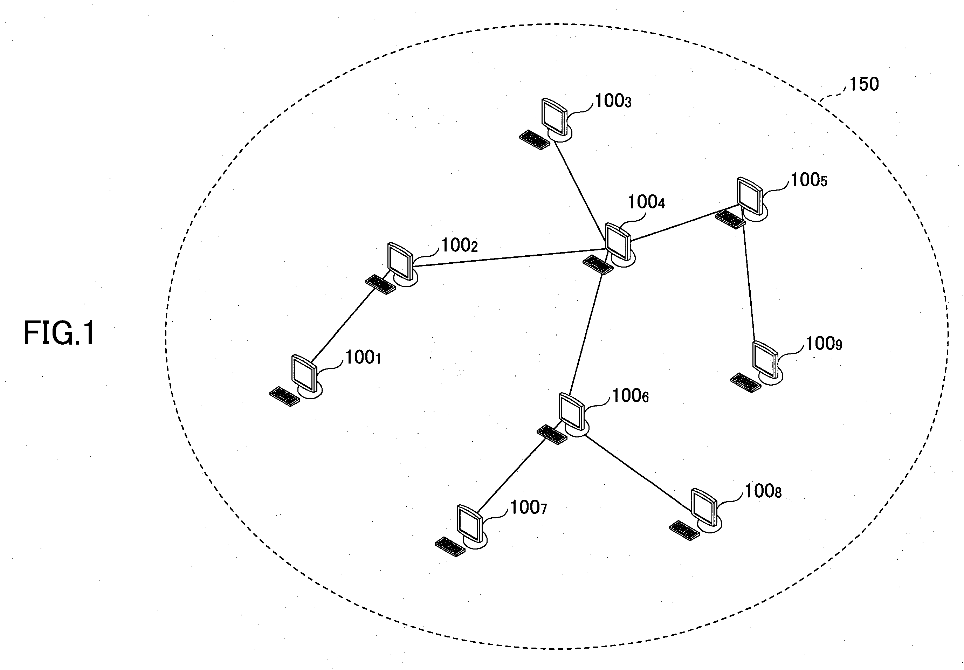

Fig. 1 shows a radio communication system according to the present embodiment.

The radio communication includes a plurality of radio communication devices 100ₙ(n is an integer greater than 0). The radio communication device 100ₙ may be a note PC or a mobile terminal or the like as long as the radio communication device 100ₙ includes a radio interface (I/F). Also, the radio communication device may be called a radio node. Although Fig. 1 shows 9 radio communication devices as an example, the number may be less than 9 or greater than 9. The radio communication devices form a mesh network. In the mesh network, the radio communication devices perform radio communication mutually with each other so as to form a radio communication network 150 like a mesh. For example, radio communication devices connected by a solid line indicates that they can perform radio communication with each other. In the radio communication network 150, there is no device that becomes a base unit, so that the radio communication devices perform distributed control. In Fig. 1, the radio communication network 150 is shown using a dotted line circle. For example, a distance by which radio communication is available in the radio communication network 150 may be represented as an approximate circle of the dotted line. The radio communication network 150 may be called a subnet. The subnet is a small radio communication network that is a management unit when a large radio communication network is divided into a plurality of small radio communication networks. It is not necessary to limit the radio communication network 150 to the mesh network. It may be configured as a network configuration, such as a star type network, different from the mesh network.

Also, in the present embodiment, each radio communication device 100ₙ can perform near field radio communication. For example, each radio communication device 100ₙ may perform near field radio communication by using IrDA, Bluetooth (BT), Ultra Wide Band (UWB), Z-Wave or ZigBee, for example. The radio communication devices 100ₙ perform near field communication so that a wireless personal area network (WPAN) may be formed. A packet transmitted by a radio communication device is transmitted to a destination radio communication device being relayed by another radio communication device. For example, a packet that is transmitted from a radio communication device 100₉ and that is addressed to a radio communication device 100₂ is transmitted to the radio communication device 100₂ being hopped by the radio communication devices 100₅ and 100₄. In the wireless personal area network, near field radio communication of about 10m can be realized, for example. More specifically, the wireless personal area network can be applied to radio communication in a relatively narrow space such as a meeting room in an office or in a room of a house or the like. Since the technique can realize about 10m as a radio communication distance, the technique can be applied to various places in addition to an office and a room.

The radio communication devices 100ₙ share a communication band available for the radio communication network 150 by dividing the communication band. Also, the radio communication devices 100ₙ transmit packets using a time division multiplexing scheme. When transmitting packets using the time division multiplexing scheme, the radio communication devices 100ₙ dynamically change the number of time slots to be included in one superframe according to the number of radio communication devices belonging to the radio communication network. By changing the number of time slots to be included in one superframe according to the number of radio communication devices belonging to the radio communication network, transfer efficiency can be improved. The change of the number of time slots may be performed by controlling the protocol of the data link layer in OSI (Open Systems Interconnection) reference model. For example, as the data link layer protocol, the MAC (Medium Access Control) protocol standardized by WiMedia Alliance may be used. Also, for example, control on beacon (broadcast signal) packet processing included in the MAC protocol may be performed. For example, a beacon period during which control information is to be transmitted is defined at the head of the superframe. The control information includes information such as radio communication network synchronization. A beacon packet to be transmitted from each radio communication device is assigned to a beacon slot in the beacon period.

For example, the number of time slots requested by the radio communication devices participating in the radio communication network 150 may be dynamically set as the number of time slots to be included in one superframe. For example, in the case when a plurality of applications are implemented in a radio communication device and the applications transmit and receive data almost at the same time, time slots more than the number of radio communication devices are required. By dynamically setting the number of time slots to be included in one superframe as the number of time slots requested by the radio communication devices, requested time slots can be set even when applications implemented in radio communication devices transmit and receive data almost at the same time. In addition, by dynamically setting the number of time slots included in one superframe to be the number of time slots requested by the radio communication devices participating in the radio communication network 150, a state where there is no idle time slot can be made. By making the state where there is no idle time slot, reduction of throughput can be avoided. Also, even when the radio communication network 150 is congested, any radio communication device can participate in the radio communication network 150. The reason is that, the number of time slots included in one superframe can be dynamically set to be the number of time slots requested by the radio communication devices participating in the radio communication network 150. Since the radio communication device can participate in the radio communication network 150, it becomes unnecessary to wait until a time slot is released.

### <Radio communication device>

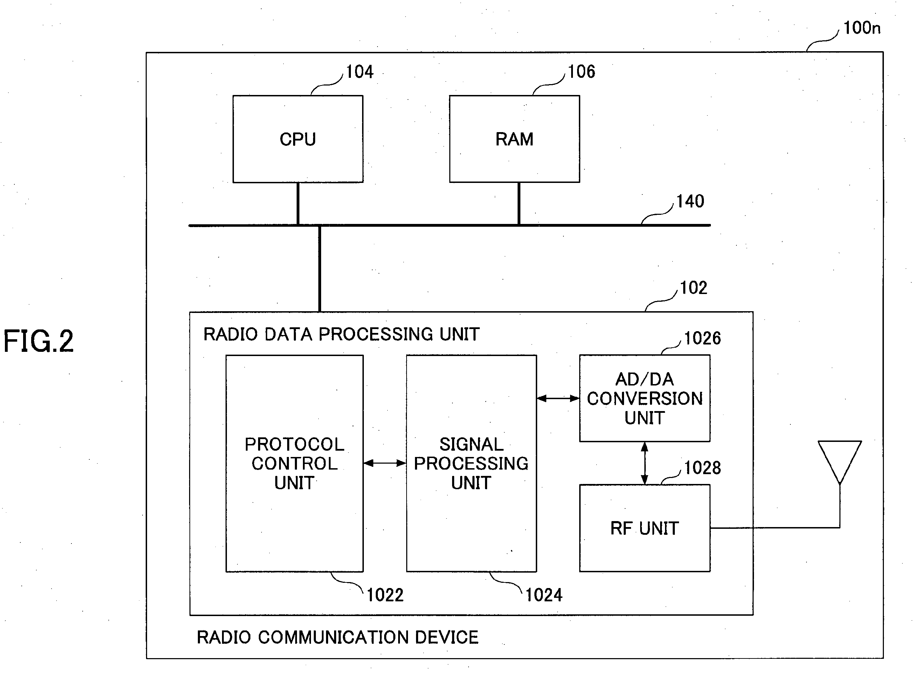

Fig. 2 shows an example of the radio communication device 100ₙ according to the present embodiment. Since each radio communication device has the same configuration, Fig. 2 shows the radio communication device 100ₙ as an example.

The radio communication device 100ₙ includes a central processing unit (CPU) 104. The CPU 104 controls each functional block of the radio communication device 100ₙ.

The radio communication device 100ₙ includes a RAM 106. The RAM stores radio data, management information and the like.

The radio communication device 100ₙ includes a radio data processing unit 102. The radio data processing unit 102 performs manipulation and processing on the radio data.

The CPU 104, the RAM 106 and the radio data processing unit 102 are connected by a bus 140.

The radio data processing unit 102 includes a protocol control unit 1022. The protocol control unit 1022 manages superframe period, the number of time slots and the like. Also, the protocol control unit 1022 issues a data transmission instruction at a time when data should be transmitted. In the present embodiment, as an example, a case is described where protocol control is performed according to WiMedia ALLIANCE as an example. But, other protocol may be applied.

The superframe includes a plurality of time slots. The first several time slots in the plurality of time slots are set as a beacon period (BP). A length of the beacon period becomes longer as the number of radio communication devices belonging to the radio communication network 150 increases. Also, the length of the beacon period becomes shorter as the number of radio communication devices belonging to the radio communication network 150 decreases. Each time slot included in the beacon period may include a plurality of beacon slots. The beacon slot may include an ID of a radio communication device requesting transmission in the superframe period and the number of time slots requested by the radio communication device.

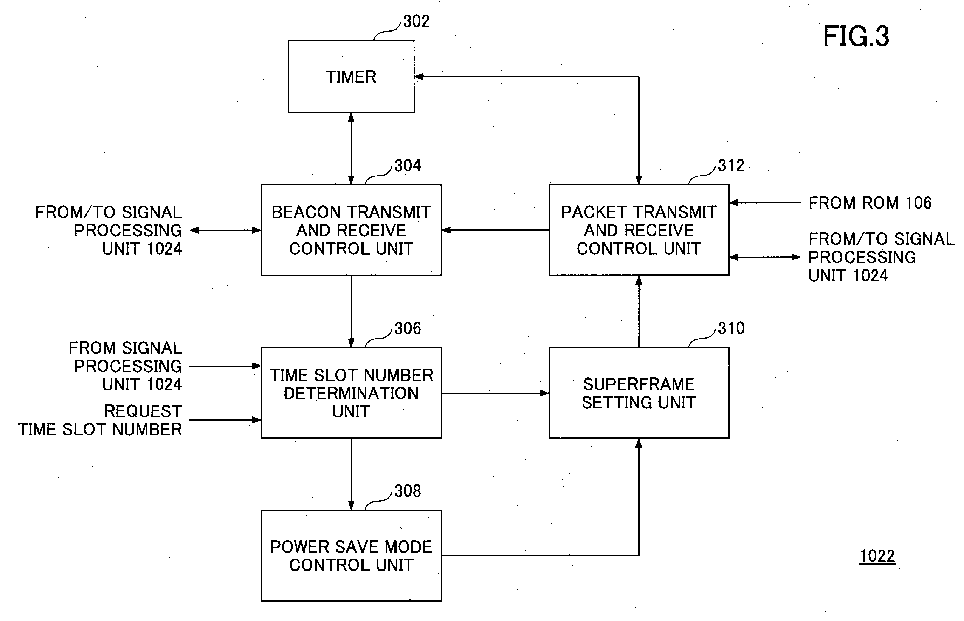

Fig. 3 shows a functional block diagram showing the protocol control unit 1022.

The protocol control unit 1022 includes a timer 302. The timer 302 is a timer for managing the superframe period.

The protocol control unit 1022 includes a beacon transmit and receive control unit 304. The beacon transmit and receive control unit 304 is connected to a signal processing unit 1024 and the timer 302. The beacon transmit and receive control unit 304 controls transmit and receive of a beacon to be broadcasted to the radio communication network 150 to which the radio communication device belongs. More specifically, control is performed such that, the radio communication device transmits a beacon to another radio communication device in a time slot for transmitting a beacon, and that the radio communication device receives a beacon at a time slot other than the time slot by which the radio communication device transmits beacon to the other radio communication device.

The protocol control unit 1022 includes a time slot number determination unit 306. The time slot number determination unit 306 is connected to the beacon transmit and receive control unit 304 and the signal processing unit 1024. The time slot number determination unit 306 receives the number of time slots to be requested by the radio communication device. The time slot number determination unit 306 determines the number of time slots to be included in one superframe based on the number of time slots requested by other radio communication devices, that is supplied by the signal processing unit 1024, and based on the number of time slots to be requested by the radio communication device for transmitting data to another radio communication device. For example, a total value of the number of time slots is obtained by adding the number of time slots requested by the other communication devices and the number of time slots requested by the radio communication device for transmitting data to the other radio communication device. The time slot number determination unit 306 determines whether the total value is 0. In other words, it is determined whether no radio communication device has transmitted a transmission request for the superframe. When the total number is 0, the time slot number determination unit 306 reports, to a power save mode control unit 308, that the total number is 0. When the total number is not 0, the time slot number determination unit 306 supplies the total value to the superframe setting unit 310.

The protocol control unit 1022 includes the power save mode control unit 308. When it is reported that the total value of time slots is 0 from the time slot number determination unit 306, the power save mode control unit 308 determines whether a power save (PS) count value is a predetermined value. The predetermined value is set as a value common to radio communication devices belonging to the radio communication network. The power save count value is a threshold used for determining whether to cause the radio communication device belonging to the radio communication network to change to a power save mode. When there is no radio communication device requesting transmission in a superframe, the power save count value is increased by a predetermined value which may be 1, for example. When the power save mode control unit 308 determines that the power save count value is the predetermined value, the power save mode control unit 308 causes the radio communication device to change to a power save mode. In other words, when a superframe in which there is no radio communication device that requests transmission continues a predetermined number of times, the radio communication device is changed to the power save mode. A power down period until changing to the power save mode is represented as a product of the beacon period and the predetermined number of times.

On the other hand, when the power save mode control unit 308 determines that the power save count value is not the predetermined value, the power save mode control unit 308 increases the power save count value by a predetermined value. The power save mode control unit 308 supplies, to the superframe setting unit 310, information indicating that the total value of time slots is 0.

The protocol control unit 1022 includes the superframe setting unit 310. The superframe setting unit 310 is connected to the time slot number determination unit 306 and the power save mode control unit 308. The superframe setting unit 310 sets a superframe based on the number of time slots supplied from the time slot number determination unit 306 or based on the information indicating that the number of time slots is 0 supplied from the power save mode control unit 308. For example, the superframe setting unit 310 sets a beacon period and a packet transmission period as time slots for transmitting data other than the beacon period. In other words, the superframe setting unit 310 sets a cycle (beacon cycle) for transmitting the beacon. The packet transmission period is used by each radio communication device sequentially for transmitting packets. The beacon period depends on the number of radio communication devices belonging to the radio communication network, and the packet transmission period depends on the number of time slots requested by radio communication devices. The length of the packet transmission period other than the beacon period becomes longer as the number of time slots requested by the radio communication devices belonging to the radio communication network 150 increases, and the length of the packet transmission period other than the beacon period becomes shorter as the number of time slots requested by the radio communication devices belonging to the radio communication network 15 decreases.

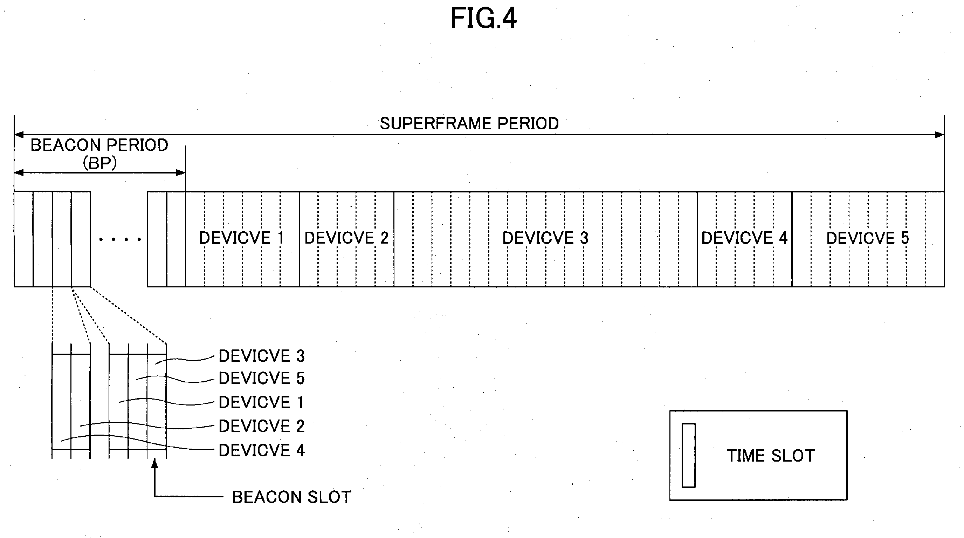

Fig. 4 shows an example (1) of the superframe.

In Fig. 4, it is assumed that the number of radio communication devices belonging to the radio communication network 150 is 5. As shown in Fig. 4, the number of time slots requested by the radio communication device 1 among the 5 radio communication devices is A(=6). Also, the number of time slots requested by the radio communication device 2 is B(=5), the number of time slots requested by the radio communication device 3 is C(=16), the number of time slots requested by the radio communication device 4 is D(=5), the number of time slots requested by the radio communication device 5 is E(=8). Therefore, the number of time slots in the packet transmission period included in the superframe is A+B+C+D+E(=40).

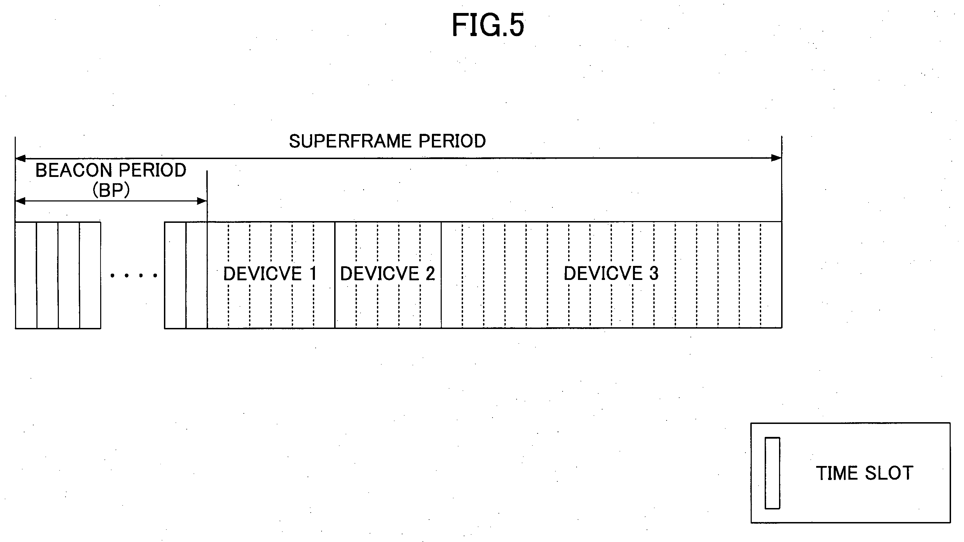

Fig. 5 shows an example (2) of the superframe.

In Fig. 5, it is assumed that the number of radio communication devices belonging to the radio communication network 150 is 3. As shown in Fig. 5, the number of time slots requested by the radio communication device 1 among the 3 radio communication devices is A(=6). Also, the number of time slots requested by the radio communication device 2 is B(=5), the number of time slots requested by the radio communication device 3 is C(=16). Therefore, the number of time slots in the packet transmission period included in the superframe is A+B+C(=27). Since the total number of time slots requested by the 3 radio communication devices is less than that of the case shown in Fig. 4, the superframe period becomes shorter.

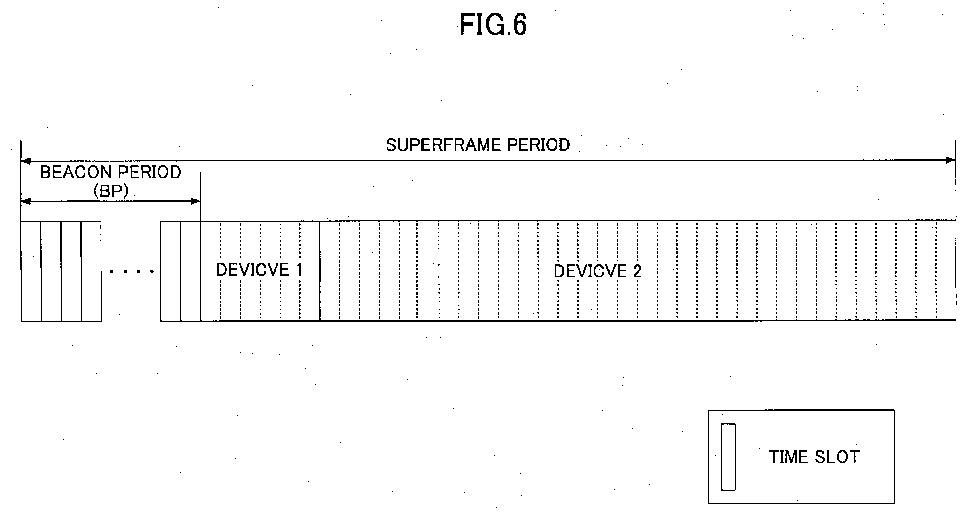

Fig. 6 shows an example (3) of the superframe.

In Fig. 6, it is assumed that the number of radio communication devices belonging to the radio communication network 150 is 2. As shown in Fig. 6, the number of time slots requested by the radio communication device 1 among the 2 radio communication devices is A(=6). Also, the number of time slots requested by the radio communication device 2 is B(=32). Therefore, the number of time slots in the packet transmission period included in the superframe is A+B(=38). Since the number of time slots requested by the radio communication device 2 is large, the superframe period becomes longer than that of the case shown in Fig. 5.

Although the beacon periods are shown to be the same length among Figs. 4-6, beacon periods may be different. For example, since the beacon period depends on the number of radio communication devices requesting transmission, the beacon period of Fig. 4 may be greater than the beacon period of Fig. 5, and the beacon period of Fig. 5 may be greater than the beacon period of Fig. 6.

Also, when the information indicating that the total value of time slots is 0 is supplied from the power save mode control unit 308, the superframe setting unit 310 sets a superframe including only the beacon period.

The protocol control unit 1022 includes the packet transmit and receive control unit 312. The packet transmit and receive control unit 312 is connected to the timer 302, the beacon transmit and receive control unit 304, the superframe setting unit 310, the ROM 106 and the signal processing unit 1024. The packet transmit and receive control unit 312 instructs the beacon transmit and receive control unit 304 to transmit a request signal for requesting time slot(s) when the radio communication device has data to be transmitted. The data to be transmitted by the radio communication device may include data whose transmission source is the radio communication device, and data, whose transmission source is another radio communication device, to be transmitted to the other radio communication device via the radio communication device. Also, the packet transmit and receive control unit 312 controls transmit and receive of packets of the radio communication device based on a timer value supplied from the timer 302 according to the superframe supplied from the superframe setting unit 310. For example, the packet transmit and receive control unit 312 controls for transmitting transmission data supplied from the ROM 106 or transmitting a packet addressed to another radio communication device received from another radio communication device at a time slot where the radio communication device perform transmission. For example, the packet transmit and receive control unit 312 supplies transmission data to the signal processing unit 1024. Also, for example, the packet transmit and receive control unit 312 performs control for receiving data that is transmitted by another radio communication device and that is addressed to the radio communication device. Also, for example, the packet transmit and receive control unit 312 performs control for receiving data that is transmitted by another radio communication device and that is addressed to another radio communication device via the radio communication device.

The radio data processing unit 102 includes the signal processing unit 1024. The signal processing unit 1024 performs modulation and demodulation for a radio packet. Also, the signal processing unit 1024 performs error correction and the like as necessary.

The radio data processing unit 102 includes an AD/DA conversion unit 1026. The AD/DA conversion unit 1026 converts digital data into analog data or converts analog data into digital data.

The radio data processing unit 102 includes an RF (Radio Frequency) unit 1028. The RF unit 1028 controls analog high frequency signal so as to transmit and receive a radio packet from an antenna.

### <Operation (1) of radio communication device>

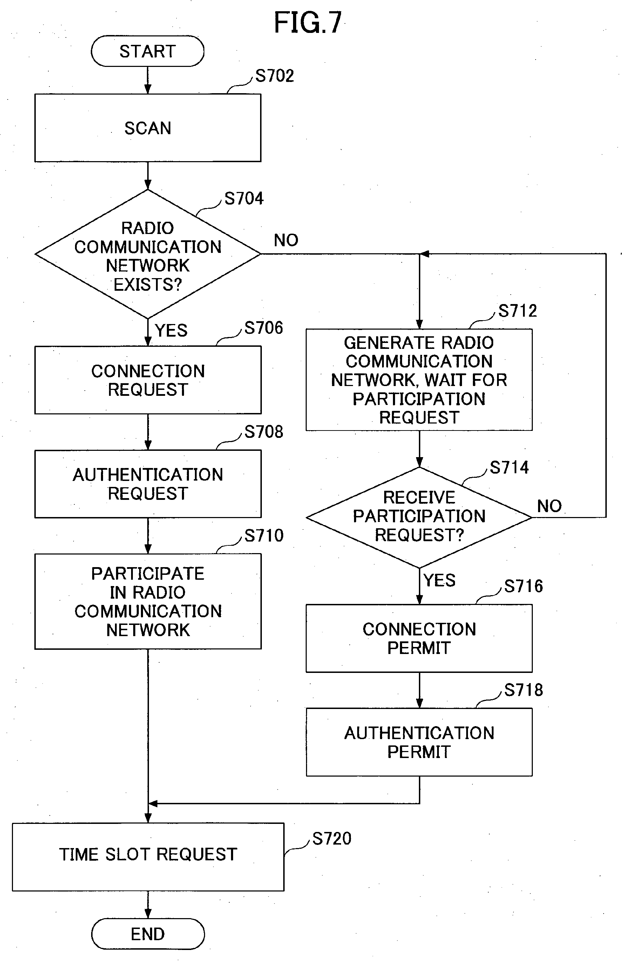

Fig. 7 shows a flowchart showing an example of operation of the radio communication device 100ₙ according to the present embodiment. Each radio communication device 100ₙ participates in the radio communication network 150 by performing processing shown in Fig. 7. In other words, each radio communication device 100ₙ performs processing shown in Fig. 7 so that the radio communication network 150 is formed.

A radio communication device 100ₙ that is not participating in the radio communication network 150 performs scan in step S702. The scan may include electric field scan, active scan, and passive scan. In the electric field scan, scan is performed by using electric field measurement. In the active scan, a beacon request command is issued to search neighboring nodes. In the passive scan, a beacon from a neighboring node is received without transmitting a beacon. For example, the protocol control unit 1022 of the radio communication device 100ₙ performs active scan.

The radio communication device 100ₙ determines whether there is the radio communication network 150 based on the scan result in step S702 (step S704). For example, the protocol control unit 1022 determines whether there is the radio communication network 150 based on the scan result in step S702. For example, it may be determined that the radio communication network 150 exists when an electronic field strength greater than a predetermined electronic field strength is detected a predetermined number of times. For example, in the case of active scan, it may be determined that the radio communication network 150 exists when receiving a beacon response. For example, in the case of passive scan, it may be determined that the radio communication network 150 exists when receiving a neighboring beacon.

When it is determined that the radio communication network 150 exists (step S704:YES), the radio communication device 100ₙ synchronizes with the radio communication network 150 and transmits a connection request (step S706). For example, the protocol control unit 1022 transmits a connection request to the radio communication network 150 according to a predetermined protocol. For example, the protocol control unit 1022 may transmit a participation request.

After transmitting the connection request in step S706, the radio communication device 100ₙ performs authentication request (step S708). For example, the protocol control unit 1022 transmits an authentication request to the radio communication network 150 according to a predetermined protocol.

After the authentication processing is performed in step S708, the radio communication device 100ₙ participates in the radio communication network 150 (step S710).

On the other hand, when the radio communication device 100ₙ determines that the radio communication network 150 does not exist in step S704 (step S704:NO), the radio communication device 100ₙ generates the radio communication network 150. The radio communication device 100ₙ that generated the radio communication network 150 continues to transmit a beacon packet. The radio communication device 100ₙ waits for receiving a participation request from another radio communication device (step S712). For example, the protocol control unit 1022 waits for receiving a participation request from another radio communication device according to a predetermined protocol. The other radio communication device ascertains the existence of the radio communication network 150 by receiving the beacon packet. The other radio communication device that recognized the existence of the radio communication network 150 synchronizes with the radio communication network 150, and transmits a participation request when participating in the radio communication network 150.

The radio communication device 100ₙ determines whether a participation request is received (step S714). For example, the protocol control unit 1022 of the radio communication device 100ₙ determines whether it received a participation request signal transmitted by another radio communication device.

When the radio communication device 100ₙ receives the participation request (step S714:YES), the radio communication device 100ₙ permits connection for the other radio communication device that transmitted the participation request (step S716). For example, based on a connection request transmitted by the other radio communication device, the protocol control unit 1022 performs connection permission when the radio communication device 100ₙ causes the other radio communication device to participate in the radio communication network 150 generated by the radio communication device 100ₙ.

On the other hand, when the radio communication device 100ₙ does not receive a participation request in step S714 (step S714:NO), the process returns to step S712. The radio communication device 100ₙ waits for receiving a participation request from another radio communication device (step S712).

After permitting connection for the other radio communication device that transmitted a participation request in step S716, the radio communication device 100ₙ permits authentication for the other radio communication device that transmitted the participation request (step S718). For example, the protocol control unit 1022 performs authentication permit when the other radio communication device is authenticated.

After the radio communication device 100ₙ participates in the radio communication network 150 in step S710, or after the radio communication device 100ₙ performs authentication permission for the other radio communication device in step S718, the radio communication device 100ₙ participating in the radio communication network 150 requests a time slot (or time slots) from the next superframe when it has data to be transmitted. For example, the radio communication device 100ₙ included in the radio communication network 150 broadcasts a beacon for requesting a time slot. Each radio communication device 100ₙ receives a beacon transmitted by another radio communication device, and sets a superframe based on an ID of the other radio communication device and the number of time slots requested by the other radio communication device that are included the beacon. Each radio communication device 100ₙ transmits a superframe to other radio communication devices.

### <Operation (2) of radio communication device>

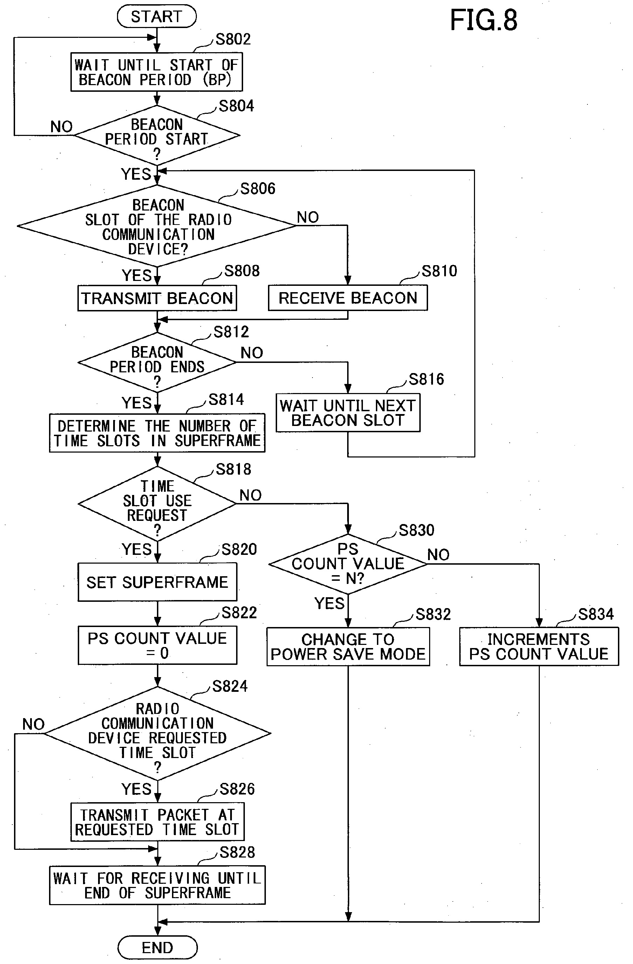

Fig. 8 shows a flowchart showing an example (2) of operation of the radio communication device 100ₙ according to the present embodiment. Fig. 8 shows processing of one superframe period. It is assumed that radio communication devices 100ₙ belonging to the radio communication network 150 synchronize with each other.

Each radio communication device 100ₙ waits until a beacon period (BP) starts (step S802). For example, the beacon transmit and receive control unit 304 waits until a beacon period starts.

Each radio communication device 100ₙ determines whether a beacon period is going to start (step S804). For example, the beacon transmit and receive control unit 304 determines whether a beacon period is going to start. Whether the beacon period is going to start is determined until a time right before the beacon period starts.

When it is not determined that the beacon period is going to start (step S804:NO), the process returns to step S802. When the beacon period is not going to start, the beacon transmit and receive control unit 304 waits until a time when beacon period is going to start.

When it is determined that the beacon period is going to start (step S804:YES), each radio communication device 100ₙ determines whether a beacon slot (a time slot for transmitting a beacon) of the radio communication device is going to start. For example, when the beacon transmit and receive control unit 304 determines that the beacon period is going to start, the beacon transmit and receive control unit 304 determines whether a beacon slot of the radio communication device is going to start.

When a radio communication device 100ₙ determines that a beacon slot of the radio communication device is going to start (step S806:YES), the radio communication device 100ₙ transmits a beacon at the beacon slot (step S808). For example, when the beacon transmit and receive control unit 304 determines that a beacon slot of the radio communication device is going to start, the beacon transmit and receive control unit 304 controls the radio communication device such that the radio communication device transmits a beacon at the beacon slot. The beacon may include an ID of the radio communication device and the number of time slots to be requested. For the beacon, modulation processing is performed by the signal processing unit 1024, and error correction processing is performed as necessary. The beacon on which modulation processing has been performed is converted to an analog signal by the AD/DA conversion unit 1026, and the signal is converted to a radio signal by the RF unit 1028, and the signal is transmitted from the antenna.

On the other hand, when a radio communication device 100ₙ does not determine that a beacon slot of the radio communication device is going to start (step S806:NO), the radio communication device 100ₙ receives a beacon transmitted from another radio communication device (step S810). For example, the beacon transmit and receive control unit 304 performs control to receive a beacon transmitted from the other radio communication device. The beacon transmitted from the other radio communication device is supplied to the RF unit 1028. In the RF unit 1028, the radio signal is converted into a signal of intermediate frequency, and the converted signal is supplied to the AD/DA conversion unit 1026. In the AD/DA conversion unit 1026, the signal of the intermediate frequency is converted into a digital signal. The digital signal is demodulated by the signal processing unit 1024, and error correction is performed as necessary. The demodulated signal is supplied to the time slot number determination unit 306.

Each radio communication device 100ₙ determines whether the beacon period ends (step S812). For example, the beacon transmit and receive control unit 304 determines whether the beacon period ends.

When it is not determined that the beacon period ends (step S812:NO), the radio communication device waits until a next beacon slot. For example, when the beacon transmit and receive control unit 304 does not determine that the beacon period ends, the beacon transmit and receive control unit 304 waits until a next beacon slot starts.

On the other hand, when it is determined that the beacon period ends (step S812:YES), each radio communication device 100ₙ determines the number of time slots in the superframe (step S814). For example, when it is determined that the beacon period ends by the beacon transmit and receive control unit 304, the time slot number determination unit 306 determines the number of time slots in the superframe based on the beacon received from the other radio communication device in step S810. More specifically, the time slot number determination unit 306 adds the number of time slots to be requested by the radio communication device for transmitting data to another radio communication device and the number of time slots requested by other radio communication device(s) for transmitting data so as to determine the total value to be the number of time slots of the superframe other than the beacon period.

Each radio communication device determines whether there is one or more time slot use requests (step S818). For example, the time slot number determination unit 306 determines whether the number of time slots determined in step S814 is equal to or greater than 1.

When it is determined that the number of time slots determined in step S814 is equal to or greater than 1 (step S818:YES), each radio communication device 100ₙ sets the superframe (step S820). For example, the superframe setting unit 310 sets the packet transmission period in the superframe other than the beacon period. In other words, a beacon cycle is set. For example, the beacon cycle is set such that, according to priorities that are predetermined for the radio communication devices, packet transmission is performed from a radio communication device having high priority.

Each radio communication device sets a power save count value to be 0 (step S822). For example, when it is determined that the number of time slots is equal to or greater than 1 by the time slot number determination unit 106, the power save mode control unit sets the power save count value to be 0. The reason is that, the power save mode is set when a superframe having no data continues a predetermined number of times.

Each radio communication device 100ₙ determines whether the radio communication device performed time slot request (step S824). For example, the packet transmit and receive control unit 312 determines whether the radio communication device performed time slot request.

When it is determined that the radio communication device requested a time slot (step S824:YES), the radio communication device transmits a packet at a time slot at which the radio communication device should transmit data (step S826). For example, when it is determined that the radio communication device requested a time slot, the packet transmit and receive control unit 312 transmits a packet at a time slot at which the radio communication device should transmit data.

On the other hand, when it is not determined that the radio communication device performed time slot request (step S824:NO), and when the radio communication device transmitted a packet in step S826, the radio communication device waits until the superframe ends (step S828). For example, the packet transmit and receive control unit 312 waits until the superframe ends. While waiting, a radio communication device that is a destination of a packet transmitted by another radio communication device, or a radio communication device that relays a packet to be transmitted to another radio communication device receives the packet transmitted from the other radio communication device. For example, while waiting, the packet transmit and receive control unit 312 performs control such that the radio communication device receives a packet transmitted from another radio communication device when the radio communication device is a destination of the packet transmitted by the other radio communication device, or when the radio communication device is a radio communication device that relays the packet to be transmitted to another radio communication device.

When it is not determined that the number of time slots is equal to or greater than 1 (step S818:NO), the wireless communicating device 100ₙ determines whether the power save count value is N (step S830). N indicates the number of superframes for changing to the power save mode, and it is preset. It may be set by a user. For example, when it is not determined that the number of time slots is equal to or greater than 1, in other words, when every radio communication device belonging to the radio communication network does not have data to be transmitted, the power save mode control unit 308 determines whether the power save count value is N.

When it is determined that the power save count value is N (step S830:YES), the radio communication device 100ₙ changes to a power save mode (step S832). For example, when it is determined that the power save count value is N, the power save mode control unit 308 changes to the power save mode.

When it is not determined that the power save count value is N (step S830:NO), the radio communication device 100ₙ adds 1 to the power save count value (step S834). For example, when it is not determined that the power save count value is N, the power save mode control unit 308 adds 1 to the power save count value (step S834).

### <Modification example (1)>

As a radio communication network according to the present embodiment, a piconet may be formed, so that a piconet coordinator (PNC) may control each radio communication device to assign time slots.

For example, it is not necessary that every radio communication device included in the radio communication network 150 has functions shown in Fig. 3, and it is only necessary that at least one radio communication device has the functions shown in Fig. 3.

### <Radio communication device>

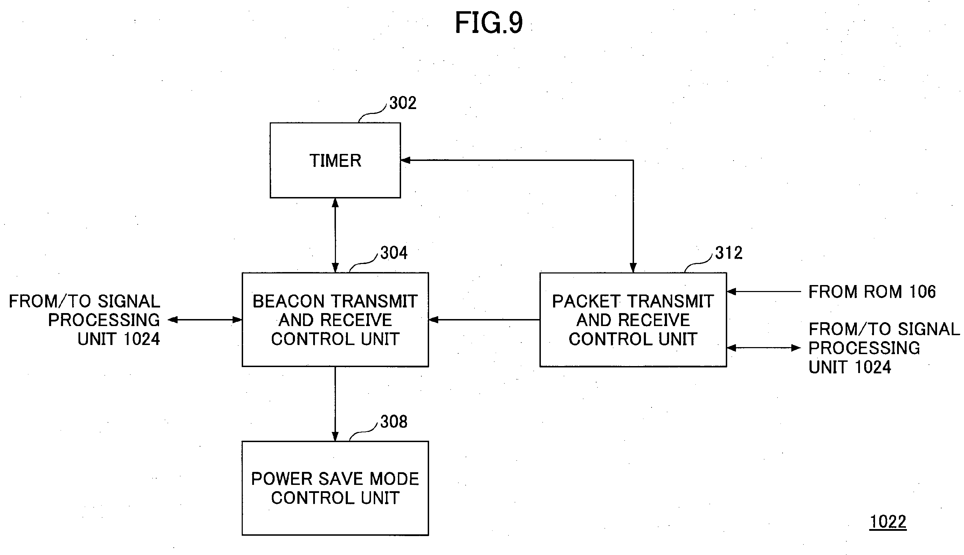

Fig. 9 shows a functional block diagram showing a protocol control unit 1022 of a radio communication device other than the piconet coordinator.

The protocol control unit 1022 includes a timer 302. The timer 302 is a timer for managing the superframe period.

The protocol control unit 1022 includes a beacon transmit and receive control unit 304. The beacon transmit and receive control unit 304 is connected to a signal processing unit 1024 and a timer 302. The beacon transmit and receive control unit 304 controls transmit and receive of a beacon to be broadcasted to the radio communication network 150 to which the radio communication device belongs. More specifically, control is performed such that, the radio communication device transmits a beacon to the other radio communication devices in a time slot for transmitting a beacon from the radio communication device, and that the radio communication device receives a beacon at a time slot other than the time slot by which the radio communication device transmits a beacon to the other radio communication devices.

The protocol control unit 1022 includes a power save mode control unit 308. When it is determined that the radio communication device is caused to be changed to a power saving mode by the piconet coordinator, the power save mode control unit 308 changes to a power saving mode.

The protocol control unit 1022 includes a packet transmit and receive control unit 312. The packet transmit and receive control unit 312 is connected to the timer 302, the beacon transmit and receive control unit 304, the ROM 106 and the signal processing unit 1024. The packet transmit and receive control unit 312 instructs the beacon transmit and receive control unit 304 to transmit a request signal for requesting time slots when the radio communication device has data to be transmitted. The data to be transmitted by the radio communication device may include data whose transmission source is the radio communication device, and data, whose transmission source is another radio communication device, to be transmitted to another radio communication device via the radio communication device. Also, the packet transmit and receive control unit 312 controls transmit and receive of packets of the radio communication device based on a timer value supplied from the timer 302 according to the superframe reported from the piconet coordinator. For example, the packet transmit and receive control unit 312 controls for transmitting transmission data supplied from the ROM 106 or a packet addressed to another radio communication device received from another radio communication device, at a time slot where the radio communication device should transmit data. For example, the packet transmit and receive control unit 312 supplies transmission data to the signal processing unit 1024. Also, for example, the packet transmit and receive control unit 312 performs control for receiving data that is transmitted by another radio communication device and that is addressed to the radio communication device. Also, for example, the packet transmit and receive control unit 312 performs control for receiving data that is transmitted by another radio communication device and that is addressed to another radio communication device via the radio communication device.

### <Modification example (2)>

When a plurality of radio communication networks exist, the number of time slots included in a superframe in each radio communication network is independent of each other. In other words, the number of time slots included in the superframe may be different among radio communication networks.

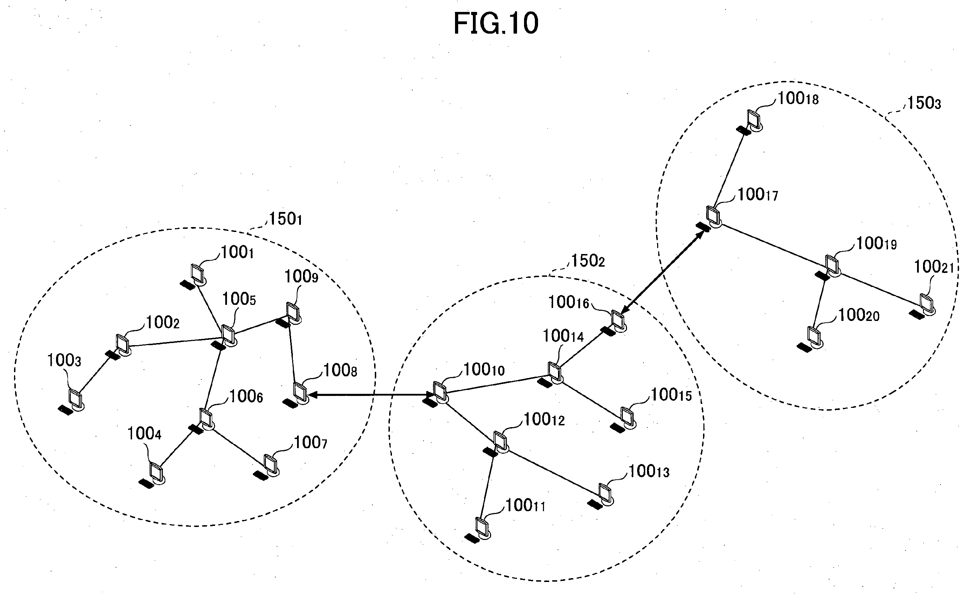

Fig. 10 is a schematic diagram showing that communication is performed between radio communication devices belonging to different radio communication networks. As shown in Fig. 10, a radio communication network 150₁ includes radio communication devices 100₁-100₉, a radio communication network 150₂ includes radio communication devices 100₁₀-100₁₆, and a radio communication network 150₃ includes radio communication devices 100₁₇-100₂₁.

The number of radio communication devices belonging to a radio communication network may be different among the radio communication networks 150₁-150₃. Also, the number of time slots requested by the radio communication device in a superframe period may be different for each of the radio communication networks 150₁-150₃. Therefore, when a destination of a packet to be transmitted by a radio communication device belonging to a radio communication network is a radio communication device belonging to a different radio communication network, there may be a case where the radio communication devices cannot be synchronized with each other. The reason is that, a start time of a beacon period for the radio communication device of the radio communication network is different from a start time of a beacon period for the radio communication device of the different radio communication network.

Considering communication in a meeting room of an office, and in a home and the like, even through the wireless PAN which is short distance radio communication is used as a radio communication network, it is not a problem since the radio communication distance of about 10 m can be realized.

However, there is a case where a radio communication device belonging to a radio communication network wants to transmit a packet to another radio communication device belonging to another radio communication network which is, different from the radio communication network.

In the radio communication system according to the present embodiment, at least one radio communication device belonging to a first radio communication network performs communication with another radio communication device belonging to a second radio communication network by using a communication protocol different from that used in the first radio communication network.

### <Radio communication device (1)>

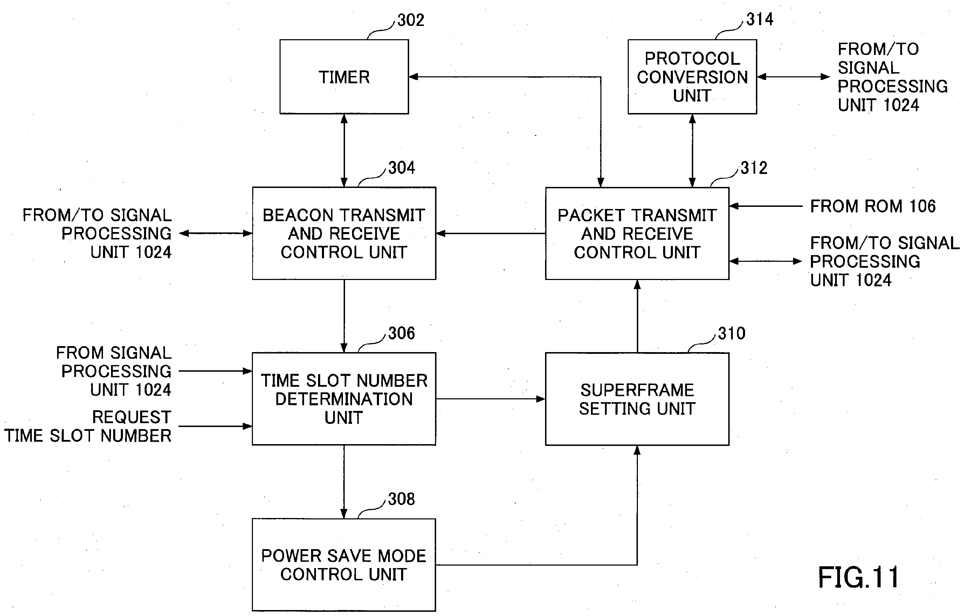

Fig. 11 shows a radio communication device (1) according to the modification example. In the radio communication network, there is no device that becomes a base unit, and the radio communication devices perform distributed control. The radio communication device includes a protocol conversion unit 314 in the radio communication device described with reference to Fig. 3.

The protocol conversion unit 314 is connected to the packet transmit and receive control unit 312 and the signal processing unit 1024. The protocol conversion unit 314 converts the communication protocol used in the radio communication network 150 to a communication protocol commonly used in the radio communication network and another radio communication network. For example, when the communication protocol used in the radio communication network 150 is UWB, and the communication protocol commonly used in the radio communication network and another radio communication network is Ethernet, the protocol conversion unit 314 performs protocol conversion from UWB to Ethernet. The protocol-converted data is transmitted to a radio communication device in the other radio communication network. Also, a packet transmitted by the Ethernet from the other radio communication network is protocol-converted to UWB by the protocol conversion unit 312. When the destination of the protocol-converted packet is a device other than the radio communication device, the packet protocol-converted into UWB is modulated by the signal processing unit 1024, and is converted to a radio signal by the RF unit 1028, so that the signal is transmitted.

### <Radio communication device (2)>

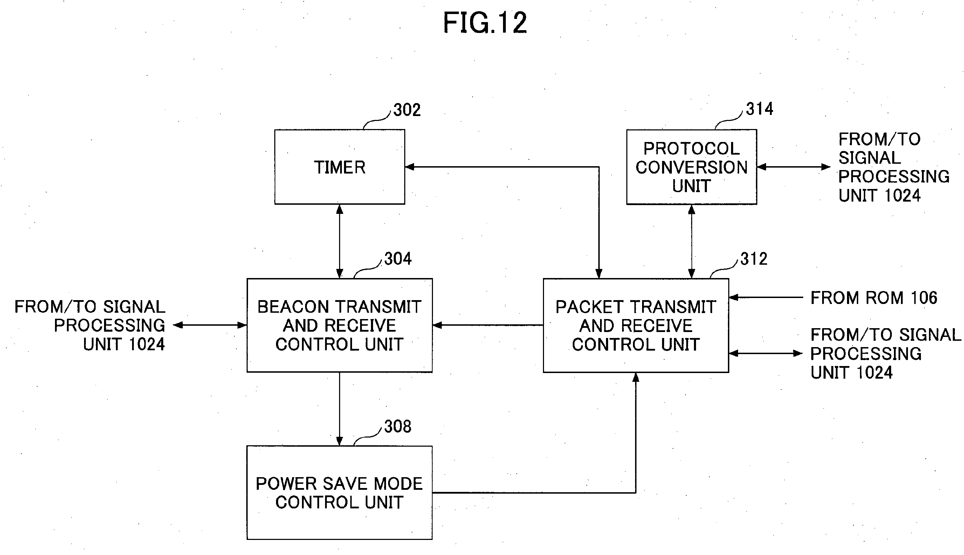

Fig. 12 shows a radio communication device (2) according to the modification example. In the radio communication network, there is a device that becomes a base unit, and the radio communication devices other than the base unit are controlled by the base unit. The base unit may be configured as a configuration shown in Fig. 11. Each radio communication device other than the base unit includes a protocol conversion unit 314 in the radio communication device described with reference to Fig. 9.

The protocol conversion unit 314 is connected to the packet transmit and receive control unit 312 and the signal processing unit 1024. The protocol conversion unit 314 converts the communication protocol used in the radio communication network 150 to a communication protocol commonly used in the radio communication network and another radio communication network. For example, when the communication protocol used in the radio communication network 150 is UWB, and the communication protocol commonly used in the radio communication network and another radio communication network is Ethernet, the protocol conversion unit 314 performs protocol conversion from UWB to Ethernet. The protocol-converted data is transmitted to a radio communication device in the other radio communication network. Also, a packet transmitted by the Ethernet from the other radio communication network is protocol-converted to UWB by the protocol conversion unit 312. When the destination of the protocol-converted packet is a device other than the radio communication device, the packet protocol-converted into UWB is modulated by the signal processing unit 1024, and is converted to a radio signal by the RF unit 1028, so that the signal is transmitted.

Accordion to the modification example, when a radio communication device belonging to a radio communication device needs to communicate with another radio communication device belonging to another radio communication network, such communication becomes available.

Although the Ethernet is used as an example of the communication protocol commonly used by radio communication networks, the protocol is not limited to the Ethernet. Other protocols may be used. For example, wireless LAN may be used.

Also, it is only necessary that there is at least one radio communication device, in a radio communication network, that can communicate with a radio communication device in another radio communication network. The at least one radio communication device includes at least two network interfaces.

### <Modification example (3)>

In the above-mentioned embodiment and modification examples, the radio communication device performs transmission request in units of time slots. Also, the time unit of the time slot is preset. But, each radio communication device may be configured to be able to arbitrarily set a period of time slot for request. Depending on an application used by the radio communication device, there is a case where only small-sized packet is transmitted. In such a case, even though transmission request is performed in units of time slots each having a predetermined period, there may be a case where data is transmitted only during a part of a time slot. For example, the beacon transmit and receive control unit 304 may specify a period of a time slot when there is data to be transmitted. According to the present modification example, since the period of the time slot to be requested can be set arbitrarily, redundant time can be further reduced so that throughput can be improved.

According to the embodiment and the modification examples, a radio communication device is provided.

The radio communication device includes:
a beacon cycle determination unit configured to determine a beacon cycle for transmitting a beacon based on a sum of a number of time slots that is included in a beacon transmitted by another radio communication device and that the other radio communication device requests for transmitting data and a number of time slots to be requested by the radio communication device for transmitting data; and
a packet transmit and receive control unit configured to control the radio communication device, according to the beacon cycle determined by the beacon cycle determination unit, to transmit a packet at a time slot and to receive a packet from another radio communication device at a time slot different from the time slot for transmission.

The radio communication device may further includes: a beacon transmit and receive control unit configured to control the radio communication device to transmit a beacon at a time slot for transmission of a beacon among a plurality of time slots included in the beacon cycle, and to receive a beacon from another radio communication device at a different time slot for receiving a beacon.

According to the radio communication device, all of the radio communication devices participating in the radio communication network can perform packet transmission in one superframe period. In other words, a period in which packet transmission is not performed does not occur. Since the period in which packet transmission is not performed does not occur, packet transfer efficiency in the whole radio network improves.

The radio communication device may include: a power save mode control unit configured to cause the radio communication device to change to a power save mode when a beacon cycle where the number of time slots calculated by the beacon cycle determination unit is 0 continues a predetermined number of times.

According to the radio communication device, the radio communication device changes to a power save mode during a period in which packet communication is not performed. By changing to the power save mode, power consumption of each radio communication device can be reduced. Therefore, power consumption of the whole radio communication network can be reduced.

In the radio communication device, the beacon cycle determination unit may determines the beacon cycle such that the beacon cycle is different from a beacon cycle set in another radio communication network.

Also, the radio communication device may include:
a protocol conversion unit configured to convert a communication protocol of a packet to be transmitted from a communication protocol used by the radio communication network to which the radio communication device belongs into a communication protocol commonly used in the radio communication network and the other radio communication network,
wherein the packet transmit and receive control unit transmits a packet that is protocol-converted by the protocol conversion unit to the other radio communication network.

According to the radio communication device, packet transmit and receive between radio subnetworks becomes available, so that the communication network range can be enlarged.

In the radio communication device, a period of the time slot can be changed.

In some applications, there may be a case where a predetermined amount of small-sized packets are transmitted. In such a case, according to the radio communication device, by decreasing the period of each time slot, redundant time in a time slot in which communication is not performed can be eliminated. Accordingly, packet transmit efficiency can be improved.

According to the embodiment and the modification examples, a radio communication method performed by a radio communication device is provided.

The radio communication method performed by a radio communication device includes:
a beacon cycle determination step of determining a beacon cycle for transmitting a beacon based on a sum of a number of time slots that is included in a beacon transmitted by another radio communication device and that the other radio communication device requests for transmitting data and a number of time slots to be requested by the radio communication device for transmitting data; and
a packet transmit and receive control step of controlling the radio communication device, according to the beacon cycle determined by the beacon cycle determination step, to transmit a packet at a time slot and to receive a packet from another radio communication device at a time slot different from the time slot for transmission.

Although the present invention has been described with reference to specific embodiments, these embodiments are simply illustrative, and various variations, modifications, alterations, substitutions and so on could be conceived by those skilled in the art. For convenience, apparatuses. according to the embodiments of the present invention have been described with reference to functional block diagrams, but the apparatuses may be implemented in hardware, software or combinations thereof. The present invention is not limited to the above-mentioned embodiment and is intended to include various variations, modifications, alterations, substitutions and so on without departing from the scope of the present invention.

The present application is based on Japanese Priority Application No. 2010-052572 filed on March 10, 2010.

## Claims

1. A radio communication device comprising:
a beacon cycle determination unit configured to determine a beacon cycle for transmitting a beacon based on a sum of a number of time slots that is included in a beacon transmitted by another radio communication device and that the other radio communication device requests for transmitting data and a number of time slots to be requested by the radio communication device for transmitting data; and
a packet transmit and receive control unit configured to control the radio communication device, according to the beacon cycle determined by the beacon cycle determination unit, to transmit a packet at a time slot and to receive a packet from another radio communication device at a time slot different from the time slot for transmission.

2. The radio communication device as claimed in claim 1, further comprising
a beacon transmit and receive control unit configured to control the radio communication device to transmit a beacon at a time slot for transmission of a beacon among a plurality of time slots included in the beacon cycle, and to receive a beacon from another radio communication device at a different time slot for receiving a beacon.

3. The radio communication device as claimed in claim 1, further comprising:
a power save mode control unit configured to cause the radio communication device to change to a power save mode when a beacon cycle where the number of time slots calculated by the beacon cycle determination unit is 0 continues a predetermined number of times.

4. The radio communication device as claimed in claim 1, wherein the beacon cycle determination unit determines the beacon cycle such that the beacon cycle is different from a beacon cycle set in another radio communication network.

5. The radio communication device as claimed in claim 4, further comprising:
a protocol conversion unit configured to convert a communication protocol of a packet to be transmitted from a communication protocol used by the radio communication network to which the radio communication device belongs into a communication protocol commonly used in the radio communication network and the other radio communication network,
wherein the packet transmit and receive control unit transmits a packet that is protocol-converted by the protocol conversion unit to the other radio communication network.

6. The radio communication device as claimed in claim 1, wherein a period of the time slot can be changed.

7. A radio communication method performed by a radio communication device comprising:
a beacon cycle determination step of determining a beacon cycle for transmitting a beacon based on a sum of a number of time slots that is included in a beacon transmitted by another radio communication device and that the other radio communication device requests for transmitting data and a number of time slots to be requested by the radio communication device for transmitting data; and
a packet transmit and receive control step of controlling the radio communication device, according to the beacon cycle determined by the beacon cycle determination step, to transmit a packet at a time slot and to receive a packet from another radio communication device at a time slot different from the time slot for transmission.

## Patentansprüche

1. Funkkommunikationsvorrichtung, die Folgendes umfasst:
eine Bakenzyklusbestimmungseinheit, die konfiguriert ist, einen Bakenzyklus zum Senden einer Bake anhand einer Summe einer Anzahl von Zeitfenstern, die in einer durch eine andere Funkkommunikationsvorrichtung gesendeten Bake enthalten sind und die die andere Funkkommunikationsvorrichtung zum Senden von Daten anfordert, und einer Anzahl von Zeitfenstern, die durch die Funkkommunikationsvorrichtung zum Senden von Daten anzufordern ist, zu bestimmen; und
eine Paketsende- und Paketempfangssteuereinheit, die konfiguriert ist, die Funkkommunikationsvorrichtung zu steuern, gemäß dem durch die Bakenzyklusbestimmungseinheit bestimmten Bakenzyklus ein Paket in einem Zeitfenster zu senden und ein Paket von einer anderen Funkkommunikationsvorrichtung in einem von dem Zeitfenster für die Sendung verschiedenen Zeitfenster zu empfangen.

2. Funkkommunikationsvorrichtung nach Anspruch 1, die ferner umfasst:
eine Bakensende- und Bakenempfangssteuereinheit, die konfiguriert ist, die Funkkommunikationsvorrichtung zu steuern, eine Bake in einem Zeitfenster zum Senden einer Bake unter mehreren Zeitfenstern, die in dem Bakenzyklus enthalten sind, zu senden und eine Bake von einer anderen Funkkommunikationsvorrichtung in einem anderen Zeitfenster zum Empfangen einer Bake zu empfangen.

3. Funkkommunikationsvorrichtung nach Anspruch 1, die ferner umfasst:
eine Energiesparbetriebsartsteuereinheit, die konfiguriert ist, zu bewirken, dass die Funkkommunikationsvorrichtung in eine Energiesparbetriebsart wechselt, wenn ein Bakenzyklus, in dem die Anzahl von Zeitfenstern, die durch die Bakenzyklusbestimmungseinheit berechnet wurde, 0 ist, für eine vorgegebene Häufigkeit fortdauert.

4. Funkkommunikationsvorrichtung nach Anspruch 1, wobei die Bakenzyklusbestimmungseinheit den Bakenzyklus derart bestimmt, dass der Bakenzyklus von einem in einem anderen Funkkommunikationsnetz eingestellten Bakenzykius verschieden ist.

5. Funkkommunikationsvorrichtung nach Anspruch 4, die ferner umfasst:
eine Protokollumsetzungseinheit, die konfiguriert ist, ein Kommunikationsprotokoll eines zu sendenden Pakets von einem Protokoll, das durch das Funkkommunikationsnetz, zu dem die Funkkommunikationsvorrichtung gehört, verwendet wird, in ein in dem Funkkommunikationsnetz und dem anderen Funkkommunikationsvorrichtungsnetz allgemein verwendetes Kommunikationsprotokoll umzusetzen,
wobei die Paketsende- und Paketempfangssteuereinheit ein Paket, das durch die Protokollumsetzungseinheit bezüglich des Protokolls umgesetzt ist, an das andere Funkkommunikationsnetz sendet.

6. Funkkommunikationsvorrichtung nach Anspruch 1, wobei eine Dauer des Zeitfensters geändert werden kann.

7. Funkkommunikationsverfahren, das durch eine Funkkommunikationsvorrichtung ausgeführt wird und das Folgendes umfasst:
einen Bakenzyklusbestimmungsschritt des Bestimmens eines Bakenzyklus zum Senden einer Bake anhand einer Summe einer Anzahl von Zeitfenstern, die in einer durch eine andere Funkkommunikationsvorrichtung gesendeten Bake enthalten sind und die die andere Funkkommunikationsvorrichtung zum Senden von Daten anfordert, und einer Anzahl von Zeitfenstern, die durch die Funkkommunikationsvorrichtung zum Senden von Daten anzufordern ist; und
einen Paketsende- und Paketempfangssteuerschritt des Steuerns der Funkkommunikationsvorrichtung gemäß dem durch den Bakenzyklusbestimmungsschritt bestimmten Bakenzyklus, um ein Paket in einem Zeitfenster zu senden und um ein Paket von einer anderen Funkkommunikationsvorrichtung in einem von dem Zeitfenster zum Senden verschiedenen Zeitfenster zu empfangen.

## Revendications

1. Dispositif de communication radio comprenant :
une unité de détermination du cycle de balise conçue pour déterminer un cycle de balise destiné à transmettre une balise en fonction d'une somme d'un nombre d'intervalles de temps qui est compris dans une balise transmise par un autre dispositif de communication radio et que l'autre dispositif de communication radio nécessite pour transmettre des données et d'un nombre d'intervalles de temps devant être requis par le dispositif de communication radio pour transmettre des données ; et
une unité de commande de transmission et de réception de paquet conçue pour commander le dispositif de communication radio, en fonction du cycle de balise déterminé par l'unité de détermination du cycle de balise, pour transmettre un paquet à un intervalle de temps et pour recevoir un paquet provenant d'un autre dispositif de communication radio à un intervalle de temps différent de l'intervalle de temps destiné à la transmission.

2. Dispositif de communication radio tel que défini dans la revendication 1, comprenant en outre
une unité de commande de transmission et de réception de balise conçue pour commander le dispositif de communication radio pour transmettre une balise à un intervalle de temps en vue de la transmission d'une balise parmi une pluralité d'intervalles de temps compris dans le cycle de balise et pour recevoir une balise provenant d'un autre dispositif de communication radio à un intervalle de temps différent destiné à recevoir une balise.

3. Dispositif de communication radio tel que défini dans la revendication 1, comprenant en outre :
une unité de commande de mode d'économie d'énergie conçue pour amener le dispositif de communication radio à changer en un mode d'économie d'énergie lorsqu'un cycle de balise où le nombre d'intervalles de temps calculé par l'unité de détermination du cycle de balise est de 0, continue un nombre de fois prédéterminé.

4. Dispositif de communication radio tel que défini dans la revendication 1, dans lequel l'unité de détermination du cycle de balise détermine le cycle de balise de manière que le cycle de balise est différent d'un cycle de balise défini dans un autre réseau de communication radio.

5. Dispositif de communication radio tel que défini dans la revendication 4, comprenant en outre :
une unité de conversion de protocole conçue pour convertir un protocole de communication d'un paquet devant être transmis depuis un protocole de communication utilisé par le réseau de communication radio auquel le dispositif de communication radio appartient en un protocole de communication couramment utilisé dans le réseau de communication radio et l'autre réseau de communication radio,
dans lequel l'unité de commande de transmission et réception de paquet transmet un paquet dont le protocole est converti par l'unité de conversion de protocole à l'autre réseau de communication radio.

6. Dispositif de communication radio tel que défini dans la revendication 1, dans lequel une période de l'intervalle de temps peut être changée.

7. Procédé de communication radio réalisé par un dispositif de communication radio comprenant :
une étape de détermination du cycle de balise consistant à déterminer un cycle de balise destiné à transmettre une balise en fonction d'une somme d'un nombre d'intervalles de temps qui est compris dans une balise transmise par un autre dispositif de communication radio et que l'autre dispositif de communication radio nécessite pour transmettre des données et d'un nombre d'intervalles de temps devant être requis par le dispositif de communication radio pour transmettre des données ; et
une étape de commande de transmission et réception de paquet consistant à commander le dispositif de communication radio, en fonction du cycle de balise déterminé par l'étape de détermination du cycle de balise, pour transmettre un paquet à un intervalle de temps et pour recevoir un paquet provenant d'un autre dispositif de communication radio à un intervalle de temps différent de l'intervalle de temps destiné à la transmission.
